# EUROPÄISCHE PATENTSCHRIFT

(11) **EP 1 498 292 B1**
(45) Veröffentlichungstag und Bekanntmachung des Hinweises auf die Patenterteilung: **12.08.2009**
(21) Anmeldenummer: 04015000.5
(22) Anmeldetag: 25.06.2004
(51) Int. Cl.: B60D 1/02, B62D 53/08

(54) **Kupplungsanordnung zum Verbinden eines Zugfahrzeugs mit einem Anhänger**
Coupling system for connecting a towing vehicle to a trailer
Système d'accouplement pour connecter un véhicule tracteur et une remorque

(30) Priorität: 14.07.2003 DE 10331884
(43) Veröffentlichungstag der Anmeldung: 19.01.2005
(73) Patentinhaber: Schnabl, Peter, 80935 München (DE)
(72) Erfinder: Schnabl, Paul, 80995 München (DE)
(74) Vertreter: Schaumburg, Thoenes, Thurn, Landskron, Eckert

(56) Entgegenhaltungen:
- EP-A- 0 320 202
- DE-U- 1 872 647
- FR-A- 1 194 652
- FR-A- 2 256 648
- GB-A- 2 042 449
- US-A- 4 131 296

## Beschreibung

Die Erfindung betrifft eine Kupplungsanordnung zum Verbinden eines Zugfahrzeugs mit einem Anhänger, umfassend ein zugfahrzeugseitiges Kupplungsteil und ein anhängerseitiges Kupplungsteil, die im gekoppelten Zustand mit Spiel ineinander greifen, gemäß dem Oberbegriff der Ansprüche 1 bzw 3.

Ein gewisses Spiel zwischen den ineinander greifenden Kupplungsteilen, beispielsweise der Zugöse und dem Kupplungsbolzen einer Anhängekupplung ist notwendig, damit sich das Zugfahrzeug und der Anhänger bei der Kurvenfahrt oder bei Bodenunebenheiten im ausreichenden Maße relativ zu einander bewegen können.

Ein Spiel zwischen den ineinander greifenden Kupplungsteilen führt aber insbesondere beim Anfahren oder Bremsen dazu, dass die ineinander greifenden Kupplungsteile hart aneinander schlagen, was den Fahrkomfort beeinträchtigt. Daher ist es bereits bekannt, eine Vorrichtung zum Dämpfen der Relativbewegung der ineinander greifenden Kupplungsteile vorzusehen. Bei bekannten Systemen dieser Art wird das Spiel zwischen Zugöse und Kupplungsbolzen dadurch eliminiert, dass man die Zugösen von außen gegen den Kupplungsbolzen drückt. Diese Anordnung hat den Nachteil, dass immer eine funktionale Schnittstelle zum Fahrzeug in Form einer Zufuhr von hydraulischer, elektrischer oder pneumatischer Energie oder einer Kombination hiervon benötigt wird.

Die GB-A-2042449 beschreibt eine Kupplungsanordnung der eingangs genannten Art, bei der ein oberhalb der Zugöse liegender Abschnitt des Kupplungsbolzens von einer Muffe umgeben ist, die gegen Federkraft in Richtung der Bolzenachse nach oben verschoben werden kann, wenn beispielsweise die Deichsel des Anhängers eine vertikale Schwenkbewegung relativ zum Zugfahrzeug ausführt. Dadurch wird das Spiel zwischen Zugöse und Fangmaul der Kupplungsanordnung zumindest bei vertikalen Schwenkbewegungen der Anhängerdeichsel gedämpft.

Aus der FR-A-2256648 ist eine Kupplungsanordnung bekannt, bei welcher das zugfahrzeugseitige Kupplungsteil eine Kugel ist, die mit einer Kugelaufnahme in der Anhängerdeichsel zusammenwirkt. Die Kupplungskugel ist am oberen Ende einer Stange angeordnet, die einen mit Fluid gefüllten Topf durchsetzt und im Bereich dieses Topfes mit radialen Flügeln versehen ist. An dem unteren aus dem Topf herausragenden Ende ist die Stange mit einem radialen Arm versehen, der zwischen zwei mit der Deichsel fest verbundene Streben greifen kann, wenn die Anhängerdeichsel am Zugfahrzeug eingehängt ist. Eine Schwenkbewegung der Anhängerdeichsel relativ zum Zugfahrzeug verursacht eine Drehung der die Kupplungskugel tragenden Stange in dem fluidgefüllten Topf, wodurch die Schwenkbewegung gedämpft wird. Eine Dämpfung zwischen der Kupplungskugel und der Kugelaufnahme beim Bremsen und Anfahren ist hierbei nicht möglich.

Aus der EP-A2-320202 ist eine Kupplungsanordnung bekannt, bei welcher das zugfahrzeugseitige Kupplungsteil von einer starren Kupplungskugel gebildet ist, während das anhängerseitige Kupplungsteil zwei teilsphärische Backen umfasst, die mechanisch mittels eines Hebels relativ zueinander verstellbar sind. Mindestens eine der Backen ist an einem Kolben angeordnet, der innerhalb eines Zylinders verschiebbar ist und nach dem Schließen der Kupplung hydraulisch verstellbar ist, um die Backe an die Kupplungskugel zu drücken und damit das Spiel zwischen der zugfahrzeugseitigen Kupplungskugel und den anhängerseitigen Kupplungsbacken zu beseitigen. Der erforderliche Hydraulikdruck wird mittels einer Pumpe erzeugt, die entweder vom Zugfahrzeug oder vom Anhänger angetrieben wird.

Der Erfindung liegt die Aufgabe zugrunde, eine Kupplungsanordnung der eingangs genannten Art anzugeben, die eine Dämpfung der Relativbewegung zwischen den ineinander greifenden Kupplungsteilen ermöglicht und die vorstehend beschriebenen Nachteile der bekannten Systeme vermeidet.

Diese Aufgabe wird erfindungsgemäß durch die im Anspruch 1 bzw 3 angegebenen Merkmale gelöst.

Bei der erfindungsgemäßen Lösung ist also die Dämpfungsvorrichtung vollständig innerhalb der Kupplungsanordnung untergebracht. Eine Schnittstelle nach außen ist nicht erforderlich. Es müssen also keine Anschlussstellen für die Zufuhr von mechanischer, hydraulischer oder elektrischer Energie an dem Zugfahrzeug vorgesehen sein.

Vorzugsweise sind Mittel zum Vorgeben eines Druckes in dem Fluidreservoir vorgesehen, wobei in dem Kanal ein Druckausgleichsventil angeordnet ist, das beim Überschreiten einer vorgegebenen Druckdifferenz zwischen der Kolbenaufnahme und dem Fluidreservoir öffnet. Die Mittel zum Vorgeben des Fluiddruckes in dem Fluidreservoir können dabei einen Geberkolben umfassen, der eine Wand des Fluidreservoirs bildet und auf seiner Außenseite durch ein Spannelement beaufschlagbar ist.

Bei einer bevorzugten Ausführungsform hat das Druckausgleichsventil einen in eine Schließstellung vorgespannten Regelkolben, der durch einen Überdruck in der Kolbenaufnahme für den Dämpfungskolben in Richtung auf eine Öffnungsstellung verstellbar ist. Stößt das anhängerseitige Kupplungsteil gegen den Dämpfungskolben, so wird der Regelkolben durch die zwischen dem Regelkolben und dem Dämpfungskolben vorhandene Fluidsäule gegen die Vorspannung ausgelenkt, bis der Druck soweit ansteigt, dass der Regelkolben seine Öffnungsstellung erreicht, in der Fluid aus dem Kanal in das Druckreservoir übertreten kann, wodurch eine Druckentlastung in dem Kanal erfolgt. Zweckmäßigerweise ist der Stellweg des Regelkolbens zwischen seiner Schließstellung und seiner Öffnungsstellung und auch der Überdruckwert, bei dem der Regelkolben seine Öffnungsstellung erreicht, einstellbar.

Bei einer bevorzugten Ausführungsform enthält das Druckausgleichsventil ein Rückschlagventil, das einen Fluidstrom von dem Fluidreservoir zu der Kolbenaufnahme ermöglicht, wenn der Fluiddruck in dem Fluidreservoir höher ist als in der Kolbenaufnahme. Wird der Dämpfungskolben von dem anhängerseitigen Kupplungsteil entlastet, so sinkt der Druck zwischen dem Dämpfungskolben und dem Regelkolben, so daß einerseits der Regelkolben wieder in seine Schließstellung zurückkehrt und andererseits über das Rückschlagventil auch Fluid in den Kanal zurückströmen kann, um den Dämpfungskolben nach außen zu drücken, so daß er möglichst in Kontakt mit dem anhängerseitigen Kupplungsteil bleibt.

Wenn der oder die Dämpfungskolben im gekuppelten Zustand in Kontakt mit dem anhängerseitigen Kupplungsteil stehen, könnte dies beim Öffnen der Kupplung wegen des fehlenden Spiels Schwierigkeiten bereiten. Aus diesem Grunde ist es zweckmäßig, wenn das Rückschlagventil unabhängig von dem Druck des Fluides durch eine Stellvorrichtung aufsteuerbar ist, so daß Fluid aus dem Kanal in das Fluidreservoir strömen kann, wenn beim Öffnen der Kupplung Druck auf den Dämpfungskolben ausgeübt wird. Dadurch kann der Dämpfungskolben leicht in die Kolbenaufnahme gedrückt werden und behindert das Öffnen der Kupplung nicht.

Bei einer sehr raumsparenden Ausführung des Druckausgleichsventils hat der Regelkolben einen Durchtrittskanal mit einem Ventilsitz auf seiner der Kolbenaufnahme zugewandten Seite, wobei an dem Ventilsitz ein Ventilkörper anliegt, der durch eine Stellvorrichtung von dem Ventilsitz abgehoben werden kann. Die Stellvorrichtung umfaßt beispielsweise einen Stößel, der den Durchtrittskanal in dem Regelkolben mit radialem Spiel durchsetzt und zur Anlage an dem Ventilkörper bestimmt ist, wenn der Regelkolben seine Öffnungsstellung erreicht. Wird durch ein Eindrücken des Dämpfungskolbens in die Kolbenaufnahme eine Bewegung des Regelkolbens ausgelöst, so kann der Ventilkörper zunächst noch folgen, da er unter Federdruck an dem Ventilsitz anliegt. Erreicht der Ventilkörper bei einer weiteren Bewegung des Regelkolbens aber den Stößel, so wird der Ventilkörper von dem Ventilsitz abgehoben, wodurch der Durchtrittskanal geöffnet wird, so daß das Fluid aus dem Raum zwischen dem Regelkolben und dem Dämpfungskolben in das Fluidreservoir übertreten kann.

Zweckmäßigerweise ist der axiale Abstand, den der Stößel von dem Ventilkörper in der Schließstellung des Regelkörpers hat, einstellbar.

Zweckmäßigerweise ist die Stellvorrichtung mit dem Betätigungsmechanismus so gekoppelt, daß beim Einleiten der Öffnungsbewegung der Kupplungsanordnung das Rückschlagventil aufgesteuert wird, um den Dämpfungskolben für das Öffnen der Kupplung zu entlasten wie dies oben beschrieben wurde. Zur Erreichung des gleichen Ziels ist ferner zweckmäßigerweise das dem Geberkolben beaufschlagende Spannelement mit dem Betätigungsmechanismus der Kupplungsanordnung so gekoppelt, daß der Geberkolben beim Einleiten der Öffnungsbewegung der Kupplungsanordnung entlastet wird.

Die oben beschriebene Dämpfungsvorrichtung kann vollständig innerhalb eines Kupplungsbolzens mit herkömmlichen Abmessungen untergebracht werden, so daß zur Ausrüstung der Anhängekupplung mit einer Dämpfungsvorrichtung lediglich der Kupplungsbolzen ausgetauscht werden muß.

Bei einer solchen Lösung kann das Fluidreservoir an dem dem Fangmaul fernen Bolzenkopf des Kupplungsbolzens angeordnet sein, wobei die Kolbenaufnahme für den Dämpfungskolben von einer Radialbohrung in dem Kupplungsbolzen gebildet ist und der diese Radialbohrung mit dem Fluidreservoir verbindende Kanal eine achsparallele Bohrung in dem Kupplungsbolzen ist. Ein solcher Kupplungsbolzen läßt sich mit relativ geringem technischen Aufwand herstellen.

Bei einer bevorzugten Ausführungsform hat der Kupplungsbolzen drei Radialbohrungen mit drei Dämpfungskolben, die in gleichförmigen Winkelabständen über den Umfang des Kupplungsbolzens verteilt angeordnet sind und über drei Kanäle und Druckausgleichsventile unabhängig voneinander mit dem Fluidreservoir verbunden sind. Drückt die Zugöse direkt auf einen der Dämpfungskolben, so werden gleichzeitig die beiden anderen entlastet. Fluid, das durch das Eindrücken des einen Dämpfungskolbens in das Fluidreservoir verschoben wird, führt zu einer Druckerhöhung in dem Fluidreservoir, wodurch aufgrund der Entlastung der beiden anderen Dämpfungskolben Fluid aus dem Fluidreservoir durch das jeweilige Druckausgleichsventil in die beiden anderen Kanäle und Kolbenaufnahmen strömt. Selbstverständlich ist es bei dieser Anordnung auch möglich, daß die Zugöse gleichzeitig zwei Dämpfungskolben teilweise beaufschlagt. Das Funktionsprinzip ändert sich dadurch aber nicht.

Bei einer bevorzugten Ausführungsform der erfindungsgemäßen Kupplungsanordnung ist auf dem Kupplungsbolzen nahe dem Bolzenkopf ein Aufwerfring gelagert, der mindestens einen radial nach außen abstehenden Fortsatz trägt, an dem ein Aufwerfhebel angreift, der mit einem Handhebel des Betätigungsmechanismus der Kupplungsanordnung in drehmomentübertragender Verbindung steht. Diese Lösung ermöglicht eine freie Drehbarkeit des Kupplungsbolzens innerhalb der Kupplungsanordnung und ermöglicht eine Kupplung des Kupplungsbolzens mit dem Betätigungsmechanismus, ohne daß dadurch der für die Unterbringung der Fluidkanäle benötigte Querschnitt des Kupplungsbolzens beeinträchtigt wird. Gleichzeitig bietet diese Lösung eine einfache Möglichkeit, das Rückschlagventil zu Beginn der Öffnungsbewegung der Kupplungsanordnung aufzusteuern, in dem der Aufwerfhebel zu Beginn seiner Stellbewegung im Sinne eines Öffnens der Kupplung auf die Stellvorrichtung zum Aufsteuern des Rückschlagventils einwirkt.

Bei einer vorteilhaften Ausführungsform der erfindungsgemäßen Kupplungsanordnung ist das auf den Geberkolben einwirkende Spannelement von einem Sicherungshebel gebildet, der bei geschlossener Kupplung derart in den Stellweg des Kupplungsbolzens ragt, daß er eine selbsttätige Bewegung des Kupplungsbolzens in Öffnungsrichtung blockiert, und der durch den Betätigungsmechanismus zu Beginn der Verstellung des Kupplungsbolzens in Öffnungsrichtung entriegelbar ist. Dieser ohnehin vorhandene Sicherungshebel kann somit eine weitere Funktion als Spannelement übernehmen, so daß keine eigenen Mittel vorhanden sein müssen, um eine Kraft auf den Geberkolben auszuüben und damit den vorgegebenen Druck in dem Fluidreservoir aufrechtzuerhalten. Um den Sicherungshebel einerseits mit einer ausreichenden Kraft an den Geberkolben anzudrücken und andererseits sicherzustellen, daß die Kupplung ohne allzu großen Kraftaufwand bequem geöffnet werden kann, ist der Sicherungshebel bei der bevorzugten Ausführungsform der Erfindung an dem Gehäuse der Kupplung schwenkbar gelagert und an dem Geberkolben durch einen Kniehebelmechanismus andrückbar, an dessen Kniegelenkachse eine Feder in Andruckrichtung und der Betätigungsmechanismus der Kupplungsanordnung in Öffnungsrichtung angreift. Auch eine relativ schwache Feder reicht aus, um den Kniehebel in seine gestreckte Lage zu bringen, in der er mit ausreichender Kraft auf den Geberkolben drückt und in der eine sehr große Kraft an dem Sicherungshebel angreifen müßte, um ihn aus dieser Position in die Öffnungsstellung zu verschwenken. Greift dagegen die Öffnungskraft an dem Kniegelenk an, so reicht bereits eine geringe Öffnungskraft um dieses aus seiner gestreckten Lage auszulenken, so daß der Kraftaufwand für das Verschwenken des Sicherungshebels in seine Öffnungsstellung zu Beginn der Betätigung der Kupplung kaum ins Gewicht fällt.

Gemäß Anspruch 3 ist die erfindungsgemäße Lösung ist aber nicht nur bei Anhängekupplungen der vorstehend genannten Art verwendbar sondern auch bei einer Sattelkupplung, die eine an einem Zugfahrzeug anzuordnende Kupplungsplatte mit einer Zapfenaufnahme für einen anhängerseitigen Königszapfen und eine mittels eines Betätigungsmechanismus der Sattelkupplung ver- und entriegelbaren Kupplungshaken hat, der den Königszapfen in der gekuppelten Stellung umgreift, wobei die Dämpfungsvorrichtung in diesem Falle in einem die Zapfenaufnahme begrenzenden kupplungsplattenfesten Wandabschnitt ausgebildet ist. Beispielsweise kann die Dämpfungsvorrichtung in einem die Zapfenaufnahme hufeisenförmig umgebenden Verschleißring ausgebildet sein. Bei dieser Lösung sind vorzugsweise wenigstens zwei Dämpfungskolben vorgesehen, die in dem in Fahrtrichtung vor dem Königszapfen liegenden Wandabschnitt angeordnet sind.

Weitere Merkmale und Vorteile der Erfindung ergeben sich aus der folgenden Beschreibung, welche in Verbindung mit den beigefügten Zeichnungen die Erfindung anhand von Ausführungsbeispielen erläutert. Es zeigen:
- Figur 1: einen Axialschnitt durch einen Kupplungsbolzen einer erfindungsgemäßen Anhängekupplung entlang Linie I-I in Figur 2,
- Figur 2: eine Draufsicht auf den erfindungsgemäßen Kupplungsbolzen,
- Figur 3: einen Schnitt durch eine erfindungsgemäße Anhängekupplung in der durch die Linie III-III in Figur 1 bezeichnete Schnittebene im gekuppelten Zustand,
- Figur 4: eine vergrößerte Darstellung des in Figur 1 durch einen Kreis gekennzeichneten Ausschnittes mit dem Druckausgleichsventil in einer ersten Stellung,
- Figur 5: eine der Figur 4 entsprechende Darstellung mit dem Druckausgleichsventil in einer zweiten Stellung,
- Figur 6: eine der Figur 4 entsprechende Darstellung mit dem Druckausgleichventil in einer dritten Stellung,
- Figur 7: einen teilweise schematischen Teilschnitt durch eine erfindungsgemäße Anhängekupplung mit dem Kupplungsbolzen in seiner Schließstellung,
- Figur 8: eine schematische Teilseitenansicht der in Figur 7 dargestellten Anordnung,
- Figur 9: eine der Figur 7 entsprechende Darstellung zu Beginn der Öffnung der Kupplung,
- Figur 10: eine der Figur 8 entsprechende zugehörige Seitenansicht,
- Figur 11: eine der Figur 7 entsprechende Darstellung mit dem Kupplungsbolzen in seiner Öffnungsstellung,
- Figur 12: eine der Figur 8 entsprechende zugehörige Seitenansicht,
- Figur 13: eine schematische Teilrückansicht der in Figur 11 dargestellten Anordnung und
- Figur 14: eine teilweise geschnittene Draufsicht auf eine Sattelkupplung die mit einer erfindungsgemäßen Dämpfungsvorrichtung versehen ist.

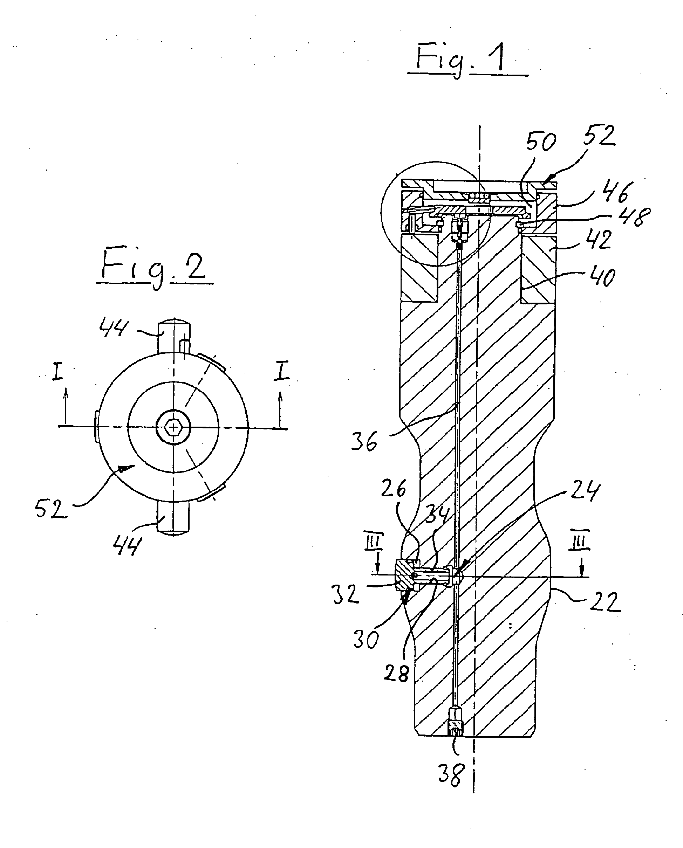

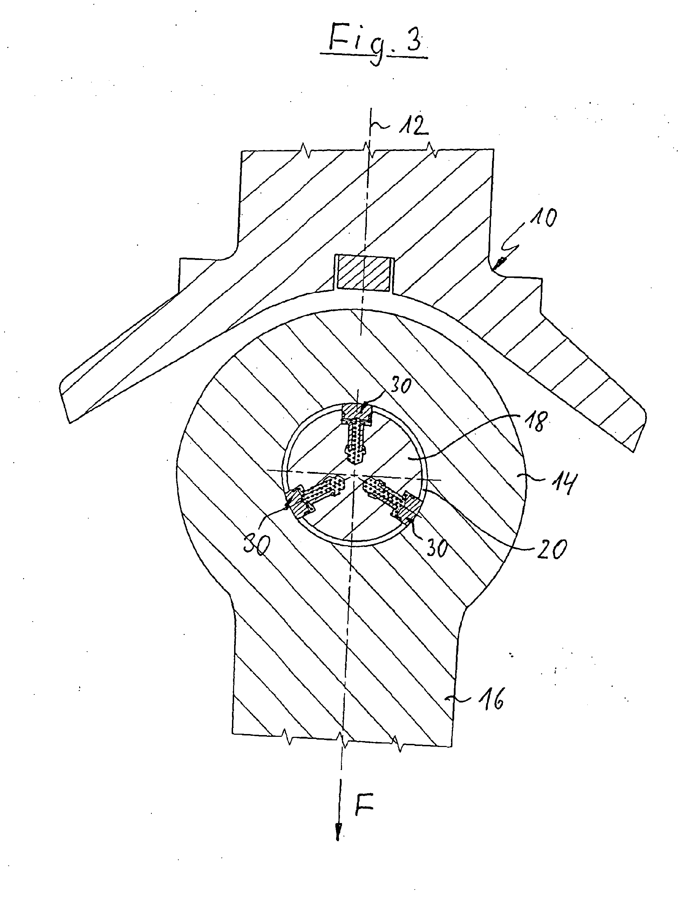

In den Figuren 1 bis 3 sind Teile einer Anhängekupplung dargestellt. In Figur 3 erkennt man ein allgemein mit 10 bezeichnetes Fangmaul einer Anhängekupplung, das um eine Achse 12 an einem Zugfahrzeug drehbar gelagert werden kann. Das Fangmaul 10 nimmt eine Zugöse 14 einer Zugstange 16 eines nicht dargestellten Anhängers auf. Die Zugöse 14 wird von einem Kupplungsbolzen 18 durchsetzt, wobei ein Spiel 20 zwischen dem Außenumfang des Kupplungsbolzen 18 und dem Innenumfang der Zugöse 14 besteht. Um zu verhindern, daß aufgrund dieses Spieles die Zugöse 14 während des Betriebes, insbesondere beim Bremsen und Anfahren harte Schläge auf den Kupplungsbolzen 18 ausübt, ist in dem Kupplungsbolzen 18 eine Dämpfungsvorrichtung ausgebildet, die im folgenden näher erläutert werden soll.

In einem balligen Bereich 22 des Kupplungsbolzens 18, der im Betrieb innerhalb der Zugöse 14 liegt, hat der Kupplungsbolzen 18 drei radiale Stufenbohrungen 24 mit einem durchmessergrößeren äußeren Abschnitt 26 und einem durchmesserkleineren Innenabschnitt 28. Die Bohrungen 24 sind in gleichmäßigen Winkelabständen von 120° über den Umfang des Kupplungsbolzens 18 verteilt. In jeder Stufenbohrung 24 ist ein Dämpfungskolben 30 verschiebbar geführt, der einen in dem Bohrungsabschnitt 26 liegenden Kolbenkopf 32 und einen in dem Bohrungsabschnitt 28 liegenden Kolbenschaft 34 hat. Jede Stufenbohrung 24 steht an ihrem radial inneren Ende mit einer achsparallelen Bohrung 36 in Verbindung, die sich über die gesamte Länge des Kupplungsbolzens 18 erstreckt und an ihrem dem freien Ende des Kupplungsbolzens 18 entsprechenden unteren Ende durch einen Verschlußstopfen 38 verschlossen ist.

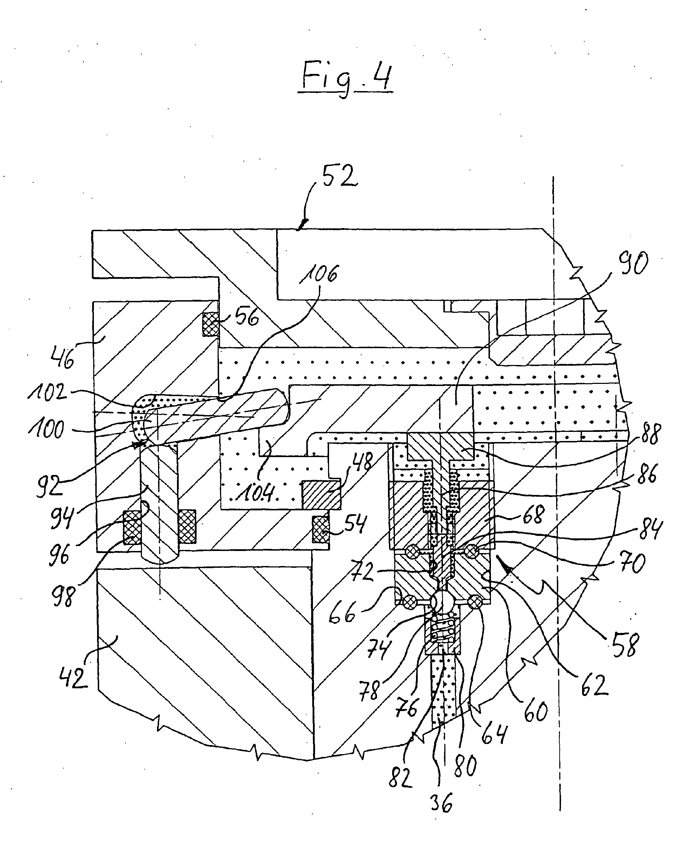

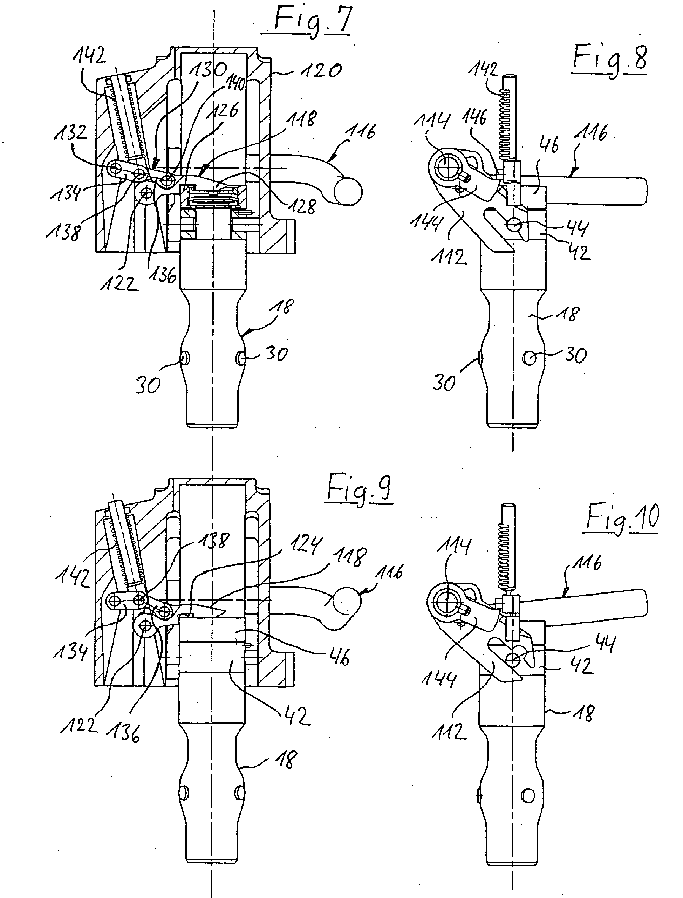

Der Kupplungsbolzen 18 hat an seinem oberen Ende, d.h. am Bolzenkopf einen durchmesserkleineren Abschnitt 40, auf dem ein Aufwerfring 42 um die Bolzenachse drehbar gelagert ist. Dieser Aufwerfring 42 steht über radial von ihm abstehende Zapfen 44 (Figur 2) in Eingriff mit Aufwerfhebeln, die Teil des Betätigungsmechanismus der Anhängekupplung sind, wie dies anhand der Figuren 7 bis 13 später noch näher erläutert wird. Der Aufwerfring 42 wird durch einen Anschlagring 46 in seiner axialen Lage gehalten, der seinerseits durch einen Sicherungsring 48 an dem Kupplungsbolzen 18 gehalten wird. Der Anschlagring 46 hat einen als Fluidreservoir 50 für ein Dämpfungsfluid dienenden Hohlraum, der an seiner Oberseite durch einen flachen Geberkolben 52 verschlossen ist. Der Aufbau der Dämpfungsvorrichtung soll nun anhand der Figuren 4 bis 6 näher erläutert werden, welche die in der Figur 1 eingekreiste Einzelheit in vergrößerter Darstellung in verschiedenen Arbeitsstellungen zeigen.

In Figur 4 erkennt man, daß der Anschlagring 46 über eine Ringdichtung 54 gegenüber dem Kupplungsbolzen 18 abgedichtet ist. Ferner ist der Geberkolben 52 durch eine Ringdichtung 56 gegenüber dem Anschlagring 46 abgedichtet.

Das so dicht abgeschlossene Fluidreservoir 50 steht mit den drei achsparallelen Bohrungen 36, von denen in den Figuren 1 bis 6 jeweils nur eine dargestellt ist, jeweils über ein allgemein mit 58 bezeichnetes Druckausgleichsventil in Verbindung. Dieses umfaßt einen Regelkolben 60, der in einer zur Bohrung 36 koaxialen aber gegenüber dieser durchmessergrößeren Bohrung 62 axial verschiebbar geführt ist. Der Regelkolben 60 liegt über einen O-Ring 64 auf dem achsnormalen Bohrungsboden 66 auf. Der Regelkolben 60 wird durch eine in die Bohrung 62 eingeschraubte Mutter 68 gegen den Bohrungsboden 66 gespannt, wobei zwischen der Mutter 68 und der ihr zugewandten achsnormalen Fläche des Regelkolbens 60 ein weiterer O-Ring 70 liegt. Durch mehr oder weniger starkes Anziehen der Mutter 68 können die O-Ringe 64 und 70 mehr oder weniger gespannt und damit die Beweglichkeit des Regelkolbens 60 in der Bohrung 62 beeinflußt werden.

Der Regelkolben 60 hat einen zentralen Durchtrittskanal 72, welcher die Oberseite und die Unterseite des Regelkolbens 60 miteinander verbindet. An seiner Unterseite ist der Durchtrittskanal 72 zu einem konischen Ventilsitz 74 erweitert, in den mittels einer Feder 76 eine Ventilkugel 78 gedrückt wird. Die Feder 76 ist in einem in einer Erweiterung der axialen Bohrung 36 eingesetzten Federgehäuse 80 gehalten, das einen Durchtrittskanal 82 hat, so daß Fluid durch das Federgehäuse 80 hindurchströmen kann. Der Ventilsitz 74 und die Ventilkugel 78 bilden zusammen mit der Feder 76 ein Rückschlagventil.

In den Durchtrittskanal 72 ist ein erster Stößel 84 eingesetzt, der einen gegenüber dem Innendurchmesser des Durchtrittskanals 72 geringeren Außendurchmesser hat. Dieser erste Stößel 84 wird durch einen weiteren Stößel 86 beaufschlagt, der die Mutter 68 durchsetzt und einen über das obere Ende der Kupplungsbolzen 18 hinausragenden Stößelkopf 88 hat, auf dem eine Druckplatte 90 aufliegt. Die Druckplatte 90 ist den drei Stößeln 86 gemeinsam. Sie kann über drei mit gleichmäßigen Winkelabständen über den Umfang des Kupplungsbolzens verteilten Gestängen 92 axial verstellt werden. Jedes dieser Gestänge besteht aus einem ersten Bolzen 94, der in einer achsparallelen Bohrung 96 in dem Anschlagring 46 verschiebbar geführt ist und nach unten aus dem Anschlagring 46 herausragt, wobei die Bohrung 96 durch eine Ringdichtung 98 abgedichtet ist. Der erste Bolzen 94 wirkt mit einem zweiten Bolzen 100 zusammen, der in einer im wesentlichen radial gerichteten Aussparung 102 des Anschlagringes 46 angeordnet ist und nach Innen in das Fluidreservoir 50 hineinragt, wo er mit seinem inneren Ende auf einem Rand 104 der Druckplatte 90 aufliegt. Wird der erste Bolzen 94 axial nach oben gedrückt, so verschwenkt er den zweiten Bolzen 100 um eine Kante 106 der Aussparung 102, was zur Folge hat, daß der zweite Bolzen 100 mit seinem radial inneren Ende die Druckplatte 90 nach unten drückt.

Der Geberkolben 52 wird durch einen Spann- oder Sicherungshebel in das Fluidreservoir 50 gedrückt, wie dies später noch anhand der Figuren 7 bis 13 erläutert wird. Dadurch kann ein bestimmter Druck in dem Fluidreservoir 50 aufrechterhalten werden.

Figur 4 zeigt die Dämpfungsvorrichtung bei geschlossener Kupplung. In der dargestellten Stellung trennt das Druckausgleichsventil 58 den Bereich zwischen dem Druckausgleichsventil 58 und dem Dämpfungskolben 30 von dem Fluidreservoir 50. Der Regelkolben 60 ist schwimmend zwischen dem Bohrungsboden 66 und der Unterseite der Mutter 68 gelagert. Wie bereits oben festgestellt, werden mit der Mutter 68 die O-Ringe 64 und 70 vorgespannt. Ferner ist in einer axialen Gewindebohrung 108 der Mutter 68 eine weitere Einstellmutter 110 eingeschraubt, mit der ein axialer Abstand oder Spielmaß zwischen dem Stößel 84 und der Ventilkugel 78 eingestellt werden kann.

Ausgehend von einem Betriebszustand gemäß Figur 3, welche eine konzentrische Anordnung von Zugöse 14 und Kupplungsbolzen 18 zeigt, in der alle drei Dämpfungskolben 30 am Zugöseninnenumfang anliegen, soll eine durch den Pfeil F gekennzeichnete Kraft von der Zugöse 14 auf den Kupplungsbolzen 18 ausgeübt werden. Die Zugöse versucht, den vorderen Dämpfungskolben 30 in den Kupplungsbolzen hineinzudrücken, wobei sich in der Radialbohrung 24 und der achsparallelen Bohrung 36 ein Fluiddruck aufbaut, der auf die Ventilkugel 78 und den Regelkolben 60 sowie über diesen auf den Geberkolben 52 wirkt. Durch die schwimmende Lagerung des Regelkolbens wird dieser zusammen mit der Ventilkugel 78 mit steigendem Druck aus seiner in Figur 4 dargestellten neutralen Stellung nach oben hin verschoben, bis die Kugel 78 den ersten Stößel 84 berührt. Die Ventilkugel 78 kann ab diesem Augenblick nicht mehr weiter nach oben steigen, da dies von der fest eingestellten Einstellmutter 110 verhindert wird.

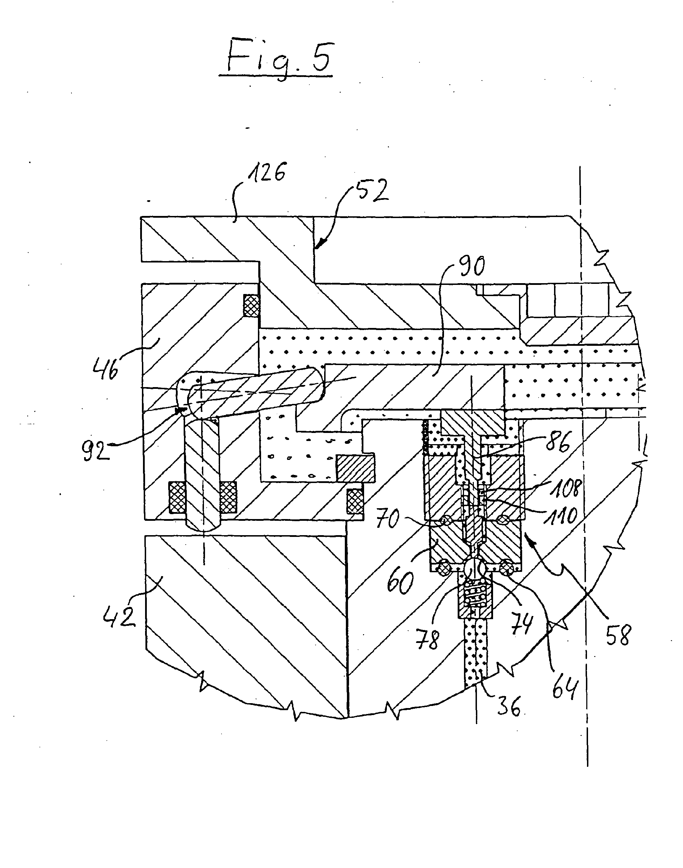

Steigt der Druck aber weiter an und wird der Regelkolben weiter nach oben versetzt, so hebt die Ventilkugel 78 von dem Ventilsitz 74 ab, wodurch der Durchtrittskanal 72 freigegeben wird (Figur 5). Der in den Bohrungen 24 und 36 aufgebaute Überdruck kann sich zum Fluidreservoir 50 hin entspannen. Man erhält auf diese Weise eine Druckbegrenzung, deren Grenzdruck einerseits über die Vorspannung der O-Ringe und damit den Stellweg des Regelkolbens und zum anderen durch die Einstellung des Spielmaßes zwischen dem ersten Stößel 84 und der Ventilkugel 78 eingestellt werden kann. Wenn die auf die Zugöse 14 wirkende Kraft F so groß wird, daß der beaufschlagte Dämpfungskolben 30 vollständig in den Kupplungsbolzen eingedrückt wird, so wird gleichzeitig der Abstand zwischen der Zugöse 14 und den beiden anderen Dämpfungskolben 30 größer, so daß diese aus dem Kupplungsbolzen 18 herausgedrückt werden, da der Druck in den Bohrungen 24 und 36 von dem Druckreservoir 50 her über das jeweilige Rückschlagventil 74, 76, 78 aufrechterhalten wird. Somit geht der Kontakt zwischen den Dämpfungskolben 30 und dem Innenumfang der Zugöse 14 niemals verloren.

Angenommen, die Kupplung soll geöffnet, d.h. die Verbindung zwischen Zugöse 14 und Kupplungsbolzen 18 gelöst werden und die Zugöse möge sich relativ zum Kupplungsbolzen in einer derart verdrehten Position befinden, daß beim Öffnen der Kupplung ein Dämpfungskolben 30 nach innen in den Kupplungsbolzen hinein bewegt werden muß, um letzteren aus seiner Schließstellung in die Offenstellung zu bewegen. Dies würde bedeuten, daß die an einem Handhebel der Betätigungsvorrichtung der Kupplungsanordnung einzuleitende Handhebelkraft entweder so hoch sein muß, daß der Systemdruck der Dämpfungsvorrichtung überschritten wird oder daß sich die Zugöse auszurichten beginnt. Dies kann dazu führen, daß die aufzubringende Handhebelkraft einen zulässigen zumutbaren (den Gesetzgeber vorgegebenen) Höchstbetrag überschreitet.

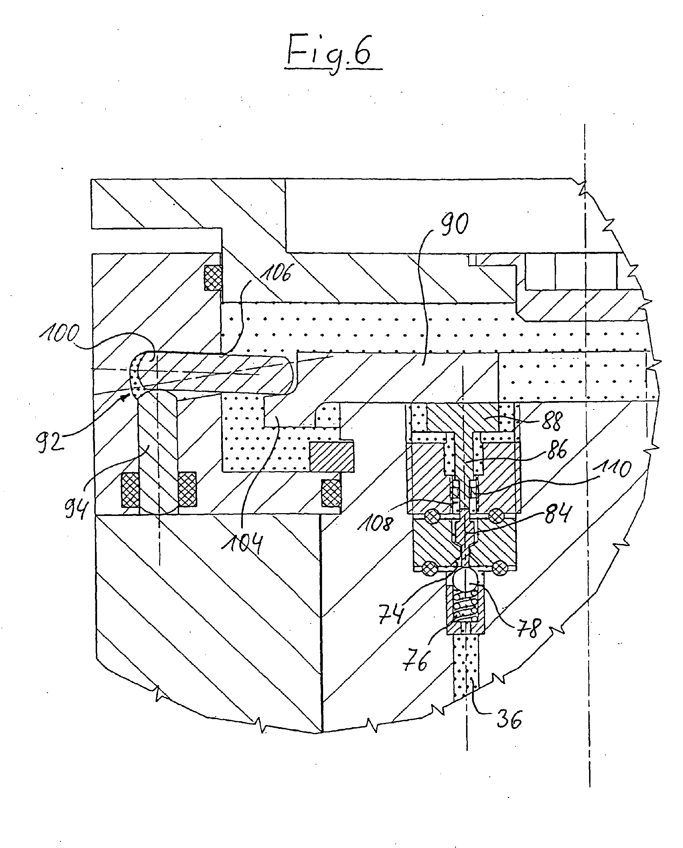

Beim Öffnen der Kupplung wird über zwei beiderseits des Kupplungsbolzens 18 angeordnete Aufwerfhebel 112, die mit der Handhebelwelle 114 eines Handhebels 116 (Figur 8) in drehmomentübertragender Verbindung stehen und an den Zapfen 44 des Aufwerfringes 42 angreifen, der Aufwerfring 42 angehoben. Dieser wirkt auf die Bolzen 94 der Gestänge 92 und drückt sie aus der in der Figur 4 dargestellten Stellung nach oben in die in der Figur 6 dargestellte Stellung, wobei die zweiten Bolzen 100 der Gestänge 92 um die jeweilige Kante 106 verschwenkt werden, wie dies Figur 6 zeigt. Dadurch wird die Druckplatte 90 nach unten gedrückt. Die Druckplatte 90 drückt die zweiten Stößel 86 und die ersten Stößel 84 ebenfalls nach unten, wodurch die Ventilkugeln 78 der Rückschlagventile von den Ventilsitzen 74 abgehoben werden, wie dies Figur 6 zeigt. Dadurch kann der Druck in den Bohrungen 24 und 36 abgebaut werden, so daß die Dämpfungskolben 30 nach radial innen ausweichen können. Damit läßt sich die Kupplung mit vertretbarem Kraftaufwand öffnen.

Damit die Dämpfungskolben einen Kuppelvorgang mit einer zu kuppelnden Zugöse nicht unnötigerweise behindern, sollten die Dämpfungskolben beim Schließvorgang der Kupplung möglichst nicht aus dem Außenumfang des Kupplungsbolzens 18 herausragen. Um dies zu gewährleisten, werden beim Öffnungsvorgang die Dämpfungskolben beim Erreichen des oberen Fangmaullappens der Anhängekupplung an einen Führungskonus herangeführt, dessen Anfangsdurchmesser größer oder gleich dem maximalen Außendurchmesser der aus dem Kupplungsbolzen herausragenden Dämpfungskolben entspricht. Bei einer weiteren Bewegung des Kupplungsbolzens in Richtung auf seine Offenstellung werden die Dämpfungskolben kontinuierlich durch den sich verjüngenden Konus radial nach innen gedrückt, bis sie schließlich mit dem Außendurchmesser des Kupplungsbolzens fluchten.

Figur 7 zeigt die Anhängekupplung in dem eingekuppelten Zustand, d.h. in der unteren Stellung des Kupplungsbolzens 18. In dieser Stellung greift ein Sicherungshebel 118, der an dem den Betätigungsmechanismus der Kupplung aufzunehmenden Gehäuse 120 der Anhängekupplung um eine Achse 122 schwenkbar gelagert ist, radial in den Stellweg des Kupplungsbolzens 18 hinein, wobei er mit einer Nut 124 über einen umlaufenden oberen Rand 126 des Geberkolbens 52 greift und mit seinem vorderen Ende 128 auf dem Geberkolben 52 aufliegt. Dieser Sicherungshebel 118 verhindert eine ungewollte Aufwärtsbewegung des Kupplungsbolzens 18, da sich der Rand 126 des Geberkolbens 52 in der Nut 124 des Sicherungshebels 118 verspreitzt.

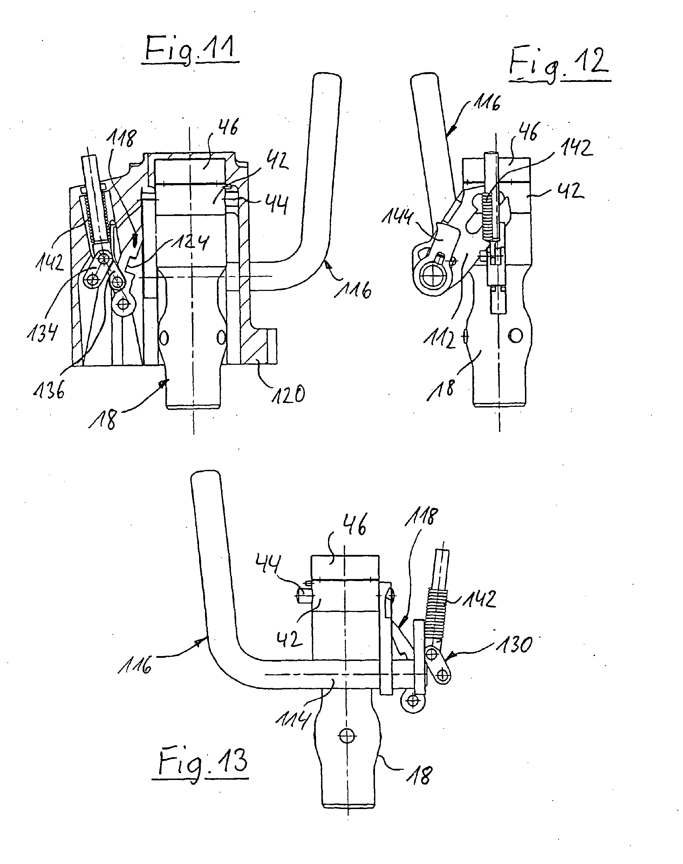

Um den nötigen Druck auf den Sicherungshebel 118 in der in der Figur 7 dargestellten Stellung ausüben zu können, ist ein Kniehebel 130 vorgesehen mit einem ersten an dem Gehäuse 120 um eine Achse 132 angelenkten Hebel 134 und einem zweiten Hebel 136, der einerseits mit dem ersten Hebel 134 über ein Kniegelenk 138 verbunden ist und andererseits in einem Gelenk 140 mit dem Sicherungshebel 118 verbunden ist. An dem Kniegelenk 138 greift einerseits von oben her eine Feder 142 an, die sich an dem Gehäuse 120 abstützt und das Kniegelenk 138 in die in der Figur 7 dargestellte gestreckte Stellung durchdrückt. Hierfür genügt eine relativ geringe Federkraft. Andererseits müßte man aber auf das vordere Ende des Sicherungshebels 18 eine sehr hohe Kraft ausüben, um diesen gegen die gestreckte Lage des Kniehebels 130 in der Figur 7 im Gegenuhrzeigersinn in seine Öffnungsstellung zu verschwenken. Diese Kraft würde die zulässige Handhebelkraft zum Öffnen der Kupplung bei weitem überschreiten. Um hier Abhilfe zu schaffen, ist mit der Handhebelwelle 114 ein Entriegelungshebel 144 drehfest verbunden, der in der geschlossenen Position der Kupplung bereits mit einem am Kniegelenk 138 ansetzenden Bolzen 146 anliegt. Wird der Handhebel 116 aus der in den Figuren 7 und 8 dargestellten, der Schließstellung des Kupplungsbolzens entsprechenden Stellung im Gegenuhrzeigersinn verschwenkt (Figuren 9 und 10), so wird dadurch das Kniegelenk 130 aus seiner in der Figur 7 dargestellten gestreckten Lage in eine abgewinkelte Position gemäß Figur 9 verschwenkt, wozu lediglich die Kraft der Feder 142 überwunden werden muß. Der Kupplungsbolzen 18 hat sich bis dahin noch nicht aus seiner untersten Position bewegt. Gleichzeitig wird in dieser Stellung der Sicherungshebel 118 so weit angehoben, daß er nun eine Aufwärtsbewegung des Kupplungsbolzens 18 nicht mehr verhindern kann. Ab dieser Position ist das zu überwindende Drehmoment zum Öffnen des Sicherungshebels wesentlich verringert. Die Fortführung des Öffnungsvorganges ist ohne größeren Krafteinsatz möglich, da zwar die Federkraft der Feder 142 beim Zusammendrücken linear mit dem Weg zunimmt, die Kniehebelwinkelverhältnisse bei zunehmender Öffnung aber eine Abnahme des eingeleiteten Drehmoments auf den Sicherungshebel bewirken. Die ganz geöffnete Kupplung ist in den Figuren 11 bis 13 dargestellt. Man erkennt, daß dabei der Entriegelungshebel 144 an dem Bolzen 146 des Kniegelenkes vorbeigleitet, so daß eine Behinderung des Öffnungsvorganges durch eine eventuelle gegenseitige Blockade vermieden wird.

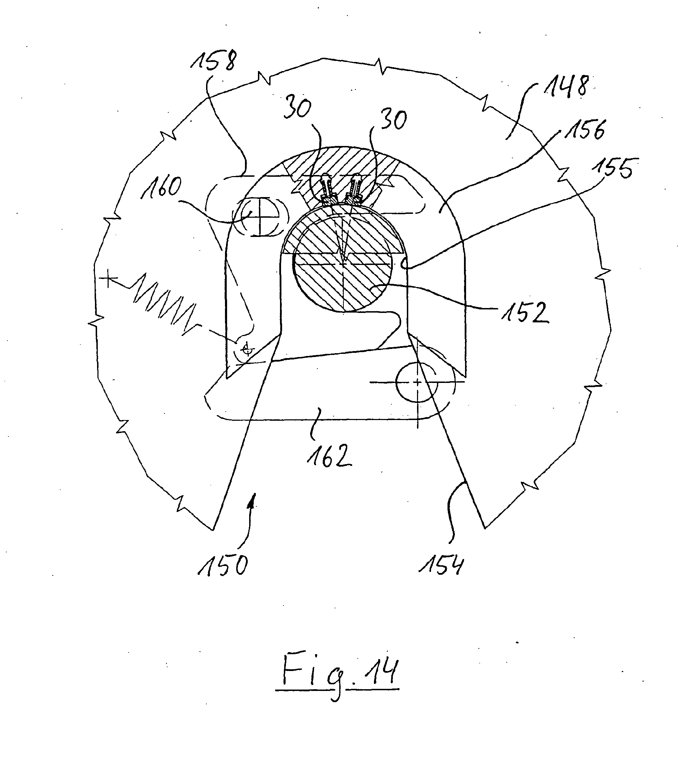

Figur 14 zeigt andeutungsweise die Möglichkeit, wie die erfindungsgemäße Dämpfungsvorrichtung auch bei einer Sattelkupplung eingebaut werden kann. Die Sattelkupplung umfaßt eine mit einem Zugfahrzeug zu verbindende Kupplungsplatte 148 mit einer Zapfenaufnahme 150 für einen mit einem Anhänger zu verbindenden Königszapfen oder Zugsattelzapfen 152. Die Zapfenaufnahme 150 hat einen konischen Einführungsabschnitt 154 und eine halbkreisförmigen Lagerabschnitt 155, in dem der Königszapfen im eingekoppelten Zustand liegt. Dieser Lagerabschnitt 155 ist von einem hufeisenförmigen Verschleißring 156 umgeben. Der Königszapfen 152 wird in an sich bekannter Weise von einem Kupplungshaken 158 gehalten, der um eine Achse 160 schwenkbar an der Sattelplatte 148 gelagert ist und durch einen Keil 162 über ein nicht dargestelltes Betätigungsgestänge in der dargestellten Kupplungsstellung verriegelt werden kann. Eine solche Sattelkupplung ist an sich bekannt und braucht daher nicht näher beschrieben zu werden.

Um eine Dämpfung zwischen dem Königszapfen 152 und der mit ihm in Berührung kommenden Fläche der Zapfenaufnahme 150 bzw. des Verschleißringes 156 zu erreichen, sind im letzteren zwei Dämpfungskolben 30 in derselben Weise gelagert, wie dies für einen Kupplungsbolzen 18 anhand der Figur 1 dargestellt ist. Auch die übrigen Teile der Dämpfungsvorrichtung können in dem Verschleißring oder einem anderen mit der Sattelplatte 148 verbundenen Teil vorgesehen sein. Damit wird ein hartes Anschlagen des Königszapfens an den mit der Sattelplatte 148 verbundenen Teilen vermieden.

## Patentansprüche

1. Kupplungsanordnung zur Verbindung eines Zugfahrzeugs mit einem Anhänger, umfassend ein zugfahrzeugseitiges Kupplungsteil und ein anhängerseitiges Kupplungsteil, die im gekuppelten Zustand mit Spiel ineinandergreifen, wobei die Kupplungsanordnung als Anhängekupplung ausgebildet ist, mit einem Fangmaul (10) zur Aufnahme einer Zugöse (14) an der Zugstange (16) eines Anhängers, mit einem Kupplungsbolzen (18) und mit einem Betätigungsmechanismus (42, 44, 112, 116) zum Verstellen des Kupplungsbolzens (18) zwischen einer Schließstellung, in der er das Fangmaul (10) und die Zugöse (14) durchsetzt, und einer Öffnungsstellung, in der er aus dem Fangmaul (10) ausgerückt ist, **dadurch gekennzeichnet, dass** in dem Kupplungsbolzen (18) eine Fluiddämpfungsvorrichtung zum Dämpfen der Relativbewegung zwischen den ineinandergreifenden Kupplungsteilen (18, 14) angeordnet ist, wobei die Dämpfungsvorrichtung vollständig innerhalb der Kupplungsanordnung untergebracht ist.

2. Kupplungsanordnung nach Anspruch 1, **dadurch gekennzeichnet, dass** der Kupplungsbolzen (18) mindestens einen in einer Kolbenaufnahme (24) verschiebbaren Dämpfungskolben (30) hat, der im gekoppelten Zustand von der Zugöse (14) beaufschlagbar ist, dass die Kolbenaufnahme (24) durch einen Kanal mit einem in der Kupplungsanordnung ausgebildeten Fluidreservoir (50) verbunden ist, dass Mittel (118) zum Vorgeben eines Druckes in dem Fluidreservoir (50) vorgesehen sind und dass in dem Kanal (36) ein Druckausgleichsventil (58) angeordnet ist, das beim Überschreiten einer vorgegebenen Druckdifferenz zwischen der Kolbenaufnahme (24) und dem Fluidreservoir (50) öffnet.

3. Kupplungsanordnung zur Verbindung eines Zugfahrzeugs mit einem Anhänger, umfassend ein zugfahrzeugseitiges Kupplungsteil und ein anhängerseitiges Kupplungsteil, die im gekuppelten Zustand mit Spiel ineinander greifen, wobei die Kupplungsanordnung als Sattelkupplung ausgebildet ist, umfassend eine an dem Zugfahrzeug anzuordnende Sattelplatte (148) mit einer Zapfenaufnahme (150) für einen anhängerseitigen Königszapfen (152) und einen mittels eines Betätigungsmechanismus der Sattelkupplung ver- und entriegelbaren Kupplungshaken (158), der den Königszapfen (152) in der gekoppelten Stellung umgreift, **dadurch gekennzeichnet, dass** in einem die Zapfenaufnahme (150) begrenzenden sattelplattenfesten Wandabschnitt (156) eine FluidDämpfungsvorrichtung zum Dämpfen der Relativbewegung zwischen den ineinandergreifenden Kupplungsteilen (156, 152) angeordnet ist, wobei die Dämpfungsanordnung vollständig innerhalb der Kupplungsanordnung untergebracht ist.

4. Kupplungsanordnung nach Anspruch 3, **dadurch gekennzeichnet, dass** der sattelplattenfeste Wandabschnitt (156) mindestens zwei in einer Kolbenaufnahme verschiebbare Dämpfungskolben (30) hat, die im gekoppelten Zustand von dem Königszapfen beaufschlagbar sind, dass die Kolbenaufnahmen jeweils durch einen Kanal mit einem Fluidreservoir verbunden sind, das in einem mit der Sattelplatte (148) verbundenen Teil vorgesehen ist, dass Mittel (118) zum Vorgeben eines Druckes in dem Fluidreservoir (50) vorgesehen sind und dass in dem Kanal (36) ein Druckausgleichsventil (58) angeordnet ist, das beim Überschreiten einer vorgegebenen Druckdifferenz zwischen der Kolbenaufnahme (24) und dem Fluidreservoir (50) öffnet.

5. Kupplungsanordnung nach Anspruch 2 oder 4, **dadurch gekennzeichnet, dass** die Mittel zum Vorgeben des Fluiddruckes in dem Fluidreservoir (50) einen Geberkolben (52) umfassen, der eine Wand des Fluidreservoirs bildet und auf seiner Außenseite durch ein Spannelement (118) beaufschlagbar ist.

6. Kupplungsanordnung nach einem der Ansprüche 2, 4 oder 5, **dadurch gekennzeichnet, dass** das Druckausgleichsventil (58) einen in eine Schließstellung vorgespannten Regelkolben (62) hat, der durch einen Überdruck in der Kolbenaufnahme (24) in Richtung auf eine Öffnungsstellung verstellbar ist.

7. Kupplungsanordnung nach Anspruch 6, **dadurch gekennzeichnet, dass** der Stellweg des Regelkolbens (62) zwischen seiner Schließstellung und seiner Öffnungsstellung einstellbar ist.

8. Kupplungsanordnung nach Anspruch 6 oder 7, **dadurch gekennzeichnet, dass** der Überdruckwert, bei dem der Regelkolben (62) seine Öffnungsstellung erreicht, einstellbar ist.

9. Kupplungsanordnung nach einem der Ansprüche 2 oder 4 bis 8, **dadurch gekennzeichnet**, das das Druckausgleichsventil (58) ein Rückschlagventil enthält, das einen Fluidstrom von dem Fluidreservoir (50) zu der Kolbenaufnahme (24) ermöglicht, wenn der Fluiddruck in dem Fluidreservoir (50) höher ist als in der Kolbenaufnahme (24).

10. Kupplungsanordnung nach Anspruch 9, **dadurch gekennzeichnet, dass** das Rückschlagventil unabhängig von dem Druck des fluides durch eine Stellvorrichtung (84, 86, 88, 90, 92) aufsteuerbar ist.

11. Kupplungsanordnung nach Anspruch 10, **dadurch gekennzeichnet, dass** der Regelkolben (60) einen Durchtrittskanal (72) mit einem Ventilsitz (74) auf seiner der Kolbenaufnahme (24) zugewandten Seite hat, dass an dem Ventilsitz (74) ein Ventilkörper (78) unter Federdruck anliegt und dass die Stellvorrichtung (84, 86, 88, 90, 92) zum Abheben des Ventilkörpers (78) von dem Ventilsitz (74) ausgebildet ist.

12. Kupplungsanordnung nach Anspruch 11, **dadurch gekennzeichnet, dass** die Stellvorrichtung einen Stößel (84, 86) hat, der den Durchtrittskanal (72) in dem Regelkolben (60) mit radialem Spiel durchsetzt und zur Anlage an dem Ventilkörper (78) bestimmt ist, wenn der Regelkolben (60) seine Öffnungsstellung erreicht.

13. Kupplungsanordnung nach Anspruch 12, **dadurch gekennzeichnet, dass** der axiale Abstand, den der Stößel (84) von dem Ventilkörper (78) in der Schließstellung des Regelkörpers (60) hat, einstellbar ist.

14. Kupplungsanordnung nach einem der Ansprüche 10 bis 13, **dadurch gekennzeichnet, dass** die Stellvorrichtung mit einem Betätigungsmechanismus (42, 44, 112, 116) der Kupplung so gekoppelt ist, dass beim Einleiten der Öffnungsbewegung der Kupplungsanordnung das Rückschlagventil (74, 76, 78) aufgesteuert wird.

15. Kupplungsanordnung nach einem der Ansprüche 5 bis 14, **dadurch gekennzeichnet, dass** das den Geberkolben (52) beaufschlagende Spannelement (118) mit dem Betätigungsmechanismus (42, 44, 112, 116) der Kupplungsanordnung so gekoppelt ist, dass der Geberkolben (52) beim Einleiten der Öffnungsbewegung der Kupplungsanordnung entlastet wird.

16. Kupplungsanordnung nach Anspruch 2 und einem der Ansprüche 5 bis 15, soweit sie auf Anspruch 1 zurückbezogen sind, **dadurch gekennzeichnet, dass** das Fluidreservoir (50) an dem dem Fangmaul (10) fernen Bolzenkopf des Kupplungsbolzens (18) angeordnet ist, dass die Kolbenaufnahme für den Dämpfungskolben (30) von einer Radialbohrung (24) in dem Kupplungsbolzen (18) gebildet ist und dass der diese Radialbohrung (24) mit dem Fluidreservoir (50) verbindende Kanal (36) eine achsparallele Bohrung in dem Kupplungsbolzen (18) ist.

17. Kupplungsanordnung nach Anspruch 16, **dadurch gekennzeichnet, dass** der Kupplungsbolzen (18) drei Radialbohrungen (24) mit drei Dämpfungskolben (30) hat, die in gleichförmigen Winkelabständen über den Umfang des Kupplungsbolzens (18) verteilt angeordnet sind und über drei Kanäle (36) und Druckausgleichsventile (58) unabhängig voneinander mit dem Fluidreservoir (50) verbunden sind.

18. Kupplungsanordnung nach einem der Ansprüche 15 bis 17, **dadurch gekennzeichnet, dass** auf dem Kupplungsbolzen (18) nahe dem Bolzenkopf ein Aufwerfring (42) gelagert ist, der mindestens einen radial nach außen abstehenden Fortsatz (44) trägt, an dem ein Aufwerfhebel (112) angreift, der mit einem Handhebel (116) des Betätigungsmechanismus in drehmomentübertragender Verbindung steht.

19. Kupplungsanordnung nach Anspruch 18 und Anspruch 9, **dadurch gekennzeichnet, dass** der Aufwerfhebel (42) zu Beginn seiner Stellbewegung im Sinne eines Öffnens der Kupplung auf die Stellvorrichtung (92) zum Aufsteuern des Rückschlagventils (74, 78) einwirkt.

20. Kupplungsanordnung nach einem der Ansprüche 15 bis 19, **dadurch gekennzeichnet, dass** das auf den Geberkolben (52) einwirkende Spannelement von einem Sicherungshebel (118) gebildet ist, der bei geschlossener Kupplung derart in den Stellweg des Kupplungsbolzens (18) ragt, dass er eine selbsttätige Bewegung des Kupplungsbolzens (18) in Öffnungsrichtung blockiert; und der durch den Betätigungsmechanismus zu Beginn der Verstellung des Kupplungsbolzens (18) in Öffnungsrichtung entriegelbar ist.

21. Kupplungsanordnung nach Anspruch 20, **dadurch gekennzeichnet, dass** der Sicherungshebel (18) an dem Gehäuse (120) der Kupplung schwenkbar gelagert und an den Geberkolben (52) durch einen Kniehebelmechanismus (130) andrückbar ist, an dessen Kniegelenkachse (138) eine Feder (142) in Andruckrichtung und der Betätigungsmechanismus der Kupplung in Öffnungsrichtung angreift.

22. Kupplungsanordnung nach Anspruch 3 und einem der Ansprüche 4 bis 15, soweit sie auf Anspruch 3 zurückbezogen sind, **dadurch gekennzeichnet, dass** die Dämpfungsvorrichtung in einem die Zapfenaufnahme (150) hufeisenförmig umgebenden Verschleißring (156) ausgebildet ist.

## Claims

1. A coupling system for connecting a towing vehicle to a trailer, comprising a towing vehicle-side coupling part and a trailer-side coupling part engaging one another with play in the coupled state, the coupling system being formed as a trailer coupling with a grab jaw (10) for receiving a towing eyelet (14) on the tow-bar (16) of a trailer, with a coupling bolt (18) and with an actuating mechanism (42, 44, 112, 116) for moving the coupling bolt (18) between a closed position, in which it goes through the grab jaw (10) and the towing eyelet (14), and an open position, in which it is disengaged from the grab jaw (10), **characterized in that** in the coupling bolt (18) a fluid damping device for damping the relative movement between the engaging coupling parts (18, 14) is arranged, the damping device being accommodated completely within the coupling system.

2. The coupling system according to claim 1, **characterized in that** the coupling bolt (18) has at least one damping piston (30) which is slidable within a piston housing (24) and can be acted upon by the towing eyelet (14) in the coupled state, **in that** the piston housing (24) is connected via a channel to a fluid reservoir (50) formed in the coupling system, **in that** means (118) for providing a pressure in the fluid reservoir (50) are provided, and **in that** in the channel (36) a pressure compensation valve (58) is arranged which opens when a predetermined pressure difference between the piston housing (24) and the fluid reservoir (50) is exceeded.

3. The coupling system for connecting a towing vehicle to a trailer, comprising a towing vehicle-side coupling part and a trailer-side coupling part engaging one another with play in the coupled state, the coupling system being formed as a fifth wheel coupling, comprising a fifth wheel plate (148) to be arranged on the towing vehicle and having a pin housing (150) for a trailer-side king pin (152), and a coupling hook (158) which can be locked and unlocked by means of an actuating mechanism of the fifth wheel coupling and encompasses the king pin (152) in the coupled state, **characterized in that** in a wall section fixed to the fifth wheel plate and defining the pin housing (150) a fluid damping device for damping the relative movement between the engaging coupling parts (156, 152) is arranged, the damping system being accommodated completely within the coupling system.

4. The coupling system according to claim 3, **characterized in that** the wall section (156) fixed to the fifth wheel has at least two damping pistons (30) which are slidable in a piston housing and can be acted upon in the coupled state by the king pin, **in that** the piston housings are each connected via a channel to a fluid reservoir provided in a part which is connected to the fifth wheel (148), **in that** means (118) for providing a pressure in the fluid reservoir (50) are provided, and **in that** in the channel (36) a pressure compensation valve (58) is arranged which opens when a predetermined pressure difference between the piston housing (24) and the fluid reservoir (50) is exceeded.

5. The coupling system according to claim 2 or 4, **characterized in that** the means for providing the fluid pressure in the fluid reservoir (50) comprise a master piston (52) which forms a wall of the fluid reservoir and can be acted upon on its outside by a tensioning element (118).

6. The coupling system according to one of the claims 2, 4 or 5,
**characterized in that** the pressure compensation valve (58) has a control piston (60) which is biased into a closed position and which can be moved towards an open position by an overpressure in the piston housing (24).

7. The coupling system according to claim 6, **characterized in that** the stroke of the control piston (60) between its closed position and its open position can be adjusted.

8. The coupling system according to claim 6 or 7, **characterized in that** the overpressure value, at which the control piston (60) reaches its open position, can be adjusted.

9. The coupling system according to one of the claims 2 or 4 to 8,
**characterized in that** the pressure compensation valve (58) includes a check valve which allows a fluid flow from the fluid reservoir (50) to the piston housing (24) when the fluid pressure in the fluid reservoir (50) is higher than in the piston housing (24).

10. The coupling system according to claim 9, **characterized in that** independent of the pressure of the fluid the check valve can be controlled to open by an actuating device (84, 86, 88, 90, 92).

11. The coupling system according to claim 10, **characterized in that** the control piston (60) has a through channel (72) with a valve seat (74) on its side facing the piston housing (24), **in that** a valve body (78) is springloaded against the valve seat (74) and **in that** the actuating device (84, 86, 88, 90, 92) is formed for lifting the valve body (78) from the valve seat (74).

12. The coupling system according to claim 11, **characterized in that** the actuating device has a tappet (84, 86) which goes through the through channel (72) in the control piston (60) with radial play and is provided for abutment on the valve body (78) when the control piston (60) reaches its open position.

13. The coupling system according to claim 12, **characterized in that** the axial distance which the tappet (84) has from the valve body (78) in the closed position of the control piston (60) can be adjusted.

14. The coupling system according to one of the claims 10 to 13,
**characterized in that** the actuating device is coupled with an actuating mechanism (42, 44, 112, 116) of the coupling such that when starting the opening movement of the coupling system the check valve (74, 76, 78) is controlled to open.

15. The coupling system according to one of the claims 5 to 14, **characterized in that** the tensioning element (118) acting upon the master piston (52) is coupled to the actuating mechanism (42, 44, 112, 116) of the coupling system such that the master piston (52) is relieved when the opening movement of the coupling system is started.

16. The coupling system according to claim 2 and one of the claims 5 to 15, as far as being dependent on claim 1, **characterized in that** the fluid reservoir (50) is arranged on the bolt head of the coupling bolt (18) remote from the grab jaw (10), **in that** the piston housing for the damping piston (30) is formed by a radial bore (24) in the coupling bolt (18) and **in that** the channel (36) connecting this radial bore (24) to the fluid reservoir (50) is an axially-parallel bore in the coupling bolt (18).

17. The coupling system according to claim 16, **characterized in that** the coupling bolt (18) has three radial bores (24) with three damping pistons (30) which are arranged at equal angular distances around the circumference of the coupling bolt (18) and are connected to the fluid reservoir (50) independent of one another via three channels (36) and pressure compensation valves (58).

18. The coupling system according to one of the claims 15 to 17,
**characterized in that** on the coupling bolt (18) near the bolt head a throw ring (42) is mounted, which has at least one radially outwardly projecting extension (44) at which a throw lever (112) acts upon which is in torque-transmitting connection with a manual lever (116) of the actuating mechanism.

19. The coupling system according to claim 18 and claim 9, **characterized in that** the throw lever (42), at the beginning of its shifting movement in the sense of an opening of the coupling, acts upon the actuating device (92) for controlling the check valve (74, 78) to open.

20. The coupling system according to one of the claims 15 to 19,
**characterized in that** the tensioning element acting upon the master piston (52) is formed of a safety lever (118), which, given a closed coupling, projects into the adjusting stroke of the coupling bolt (18) such that it blocks an automatic movement of the coupling bolt (18) in opening direction, and which can be unlocked by the actuating mechanism at the beginning of the movement of the coupling bolt (18) in the opening direction.

21. The coupling system according to claim 20, **characterized in that** the safety lever (118) is pivotably mounted on the casing (120) of the coupling and can be pressed against the master piston (52) by a toggle lever mechanism (130), at which toggle joint axis (138) a spring (142) acts upon in pressing direction and the actuating mechanism of the coupling acts upon in opening direction.

22. The coupling system according to claim 3 and one of the claims 4 to 15, as far as they are dependent on claim 3, **characterized in that** the damping device is formed within a wear ring (156) surrounding the pin housing (150) in a horse-shoe shaped fashion.

## Revendications

1. Dispositif d'attelage pour atteler un véhicule tracteur avec une remorque, comportant un organe d'attelage solidaire du véhicule tracteur et un organe d'attelage solidaire de la remorque, lesquels organes sont en prise l'un avec l'autre, avec un jeu, dans la position attelée, ledit dispositif d'attelage étant réalisé sous la forme d'un attelage à timon comportant une mâchoire d'attache (10) destinée à recevoir un anneau de traction (14)prévu sur la barre de traction (16) d'une remorque, comportant un axe de couplage (18) et comportant un mécanisme d'actionnement (42, 44, 112, 116) destiné à déplacer l'axe de couplage (18) entre une position de fermeture, dans laquelle ledit axe passe au travers de la mâchoire d'attache (10) et de l'anneau de traction (14), et une position d'ouverture, dans laquelle ledit axe est désolidarisé de la mâchoire d'attache (10), **caractérisé en ce qu'**un dispositif d'amortissement à fluide, destiné à amortir le mouvement relatif entre les organes d'attelage (18, 14) qui sont en prise l'un avec l'autre, est agencé dans l'axe de couplage (18), ledit dispositif d'amortissement étant logé entièrement à l'intérieur du dispositif d'attelage.

2. Dispositif d'attelage selon la revendication 1, **caractérisé en ce que** l'axe de couplage (18) comporte au moins un piston amortisseur (30), qui est mobile dans un logement pour piston (24) et qui, dans la position attelée, peut être sollicité par l'anneau de traction (14), **en ce que** le logement pour piston (24) communique, via un conduit, avec un réservoir de fluide (50) agencé dans le dispositif d'attelage, **en ce qu'**il est prévu des moyens (118) destinés à appliquer une pression dans le réservoir de fluide (50), et **en ce qu'**une soupape d'équilibrage de pression (58) est montée dans le conduit (36), laquelle soupape s'ouvre lorsque la différence de pression entre le logement pour piston (24) et le réservoir de fluide (50) est supérieure à une valeur prédéterminée.

3. Dispositif d'attelage pour atteler un véhicule tracteur avec une remorque, comportant un organe d'attelage solidaire du véhicule tracteur et un organe d'attelage solidaire de la remorque, lesquels organes sont en prise l'un avec l'autre, avec un jeu, dans la position attelée, ledit dispositif d'attelage étant réalisé sous la forme d'une sellette d'attelage comportant un plateau (148) à monter sur le véhicule tracteur et muni d'un logement (150) pour un pivot central (152) solidaire de la remorque, et d'un crochet d'attelage (158), qui peut être verrouillé et déverrouillé au moyen d'un mécanisme d'actionnement de la sellette d'attelage qui enserre le pivot central (152) dans la position attelée, **caractérisé en ce qu'**un dispositif d'amortissement à fluide, destiné à amortir le mouvement relatif entre les organes d'attelage (156, 152) qui sont en prise l'un avec l'autre, est agencé dans une paroi (156) solidaire du plateau de la sellette, ladite paroi délimitant le logement (150) pour le pivot, ledit dispositif d'amortissement étant logé entièrement à l'intérieur du dispositif d'attelage.

4. Dispositif d'attelage selon la revendication 3, **caractérisé en ce que** la paroi (156) solidaire du plateau de sellette comporte au moins deux pistons amortisseurs (30) qui sont mobiles dans un logement pour piston et qui, dans la position attelée, peuvent être sollicités par le pivot central, **en ce que** les logements pour piston communiquent chacun, via un conduit associé, avec un réservoir de fluide qui est agencé dans un élément assemblé au plateau de sellette (148), **en ce qu'**il est prévu des moyens (118) destinés à appliquer une pression dans le réservoir de fluide (50), et **en ce qu'**une soupape d'équilibrage de pression (58) est montée dans le conduit (36), laquelle soupape s'ouvre lorsque la différence de pression entre les logements pour piston (24) et le réservoir de fluide (50) est supérieure à une valeur prédéterminée.

5. Dispositif d'attelage selon la revendication 2 ou 4, **caractérisé en ce que** les moyens destinés à appliquer une pression dans le réservoir de fluide (50) comportent un maître-cylindre (52), qui forme une paroi du réservoir de fluide et qui peut être sollicité sur sa face extérieure par un élément de serrage (118).

6. Dispositif d'attelage selon la revendication 2, 4 ou 5, **caractérisé en ce que** la soupape d'équilibrage de pression (58) comporte un piston de réglage (60), qui est précontraint dans une position de fermeture et qui peut être déplacé vers une position d'ouverture sous l'effet d'une surpression dans le logement pour piston (24).

7. Dispositif d'attelage selon la revendication 6, **caractérisé en ce qu'**il est possible de régler la trajectoire de réglage du piston de réglage (60) entre sa position de fermeture et sa position d'ouverture.

8. Dispositif d'attelage selon la revendication 6 ou 7, **caractérisé en ce qu'**il est possible de régler la valeur de la surpression à laquelle le piston de réglage (60) atteint sa position d'ouverture.

9. Dispositif d'attelage selon l'une quelconque des revendications 2 ou 4 à 8, **caractérisé en ce que** la soupape d'équilibrage de pression (58) comporte un clapet anti-retour qui permet une circulation du fluide depuis le réservoir de fluide (50) vers le logement pour piston (24), lorsque la pression du fluide dans le réservoir de fluide (50) est supérieure à celle régnant dans le logement pour piston (24).

10. Dispositif d'attelage selon la revendication 9, **caractérisé en ce que** le clapet anti-retour peut être actionné en ouverture, indépendamment de la pression du fluide, par un dispositif de commande (84, 86, 88, 90, 92).

11. Dispositif d'attelage selon la revendication 10, **caractérisé en ce que** le piston de réglage (60) comporte un conduit de passage (72) avec un siège de soupape (74) sur son côté orienté vers le logement pour piston (24), **en ce qu'**un corps de soupape (78) est en appui contre le siège de soupape (74) sous la pression d'un ressort, et **en ce que** le dispositif de commande (84, 86, 88, 90, 92) est agencé pour soulever le corps de soupape (78) hors du siège de soupape (74).

12. Dispositif d'attelage selon la revendication 11, **caractérisé en ce que** le dispositif de commande comporte un poussoir (84, 86), qui traverse, avec un jeu radial, le conduit de passage (72) dans le piston de réglage (60), et qui est destiné à prendre appui contre le corps de soupape (78) lorsque le piston de réglage (60) a atteint sa position d'ouverture.

13. Dispositif d'attelage selon la revendication 12, **caractérisé en ce qu'**il est possible de régler la distance axiale, de laquelle le poussoir (84) est éloigné du corps de soupape (78) dans la position de fermeture du piston de réglage (60).

14. Dispositif d'attelage selon l'une quelconque des revendications 10 à 13, **caractérisé en ce que** le dispositif de commande est couplé à un mécanisme d'actionnement (42, 44, 112, 116) du dispositif d'attelage de telle sorte que le clapet anti-retour (74, 76, 78) est actionné en ouverture sous l'effet du déclenchement du mouvement d'ouverture du dispositif d'attelage.

15. Dispositif d'attelage selon l'une quelconque des revendications 5 à 14, **caractérisé en ce que** l'élément de serrage (118), sollicitant le maître-cylindre (52), est couplé avec le mécanisme d'actionnement (42, 44, 112, 116) du dispositif d'attelage de telle sorte que le maître-cylindre (52) n'est plus sollicité dès le déclenchement du mouvement d'ouverture du dispositif d'attelage.

16. Dispositif d'attelage selon la revendication 2 et l'une quelconque des revendications 5 à 15, dans la mesure où elles dépendent de la revendication 1, **caractérisé en ce que** le réservoir de fluide (50) est disposé sur la tête de l'axe de couplage (18), éloignée de la mâchoire d'attache (10), **en ce que** le logement pour le piston amortisseur (30) est formé par un alésage radial (24) ménagé dans l'axe de couplage (18), et **en ce que** le conduit (36), reliant ledit alésage radial (24) avec le réservoir de fluide (50), est un alésage parallèle à l'axe ménagé dans l'axe de couplage (18).

17. Dispositif d'attelage selon la revendication 16, **caractérisé en ce que** l'axe de couplage (18) comporte trois alésages radiaux (24) avec trois pistons amortisseurs (30), qui sont disposés à des distances angulaires également réparties sur la périphérie de l'axe de couplage (18) et qui sont reliés indépendamment l'un de l'autre au réservoir de fluide (50) via trois conduits associés (36) et des soupapes d'équilibrage de pression (58).

18. Dispositif d'attelage selon l'une quelconque des revendications 15 à 17, **caractérisé en ce que** sur l'axe de couplage (18), à proximité de la tête de celui-ci, est disposée une bague de relèvement (42) qui comporte au moins une saillie (44), qui s'avance radialement vers l'extérieur et contre laquelle entre en contact un levier de relèvement (112), qui est relié à un levier manuel (116) du mécanisme d'actionnement en vue de transmettre un couple de rotation.

19. Dispositif d'attelage selon les revendications 18 et 9, **caractérisé en ce que** le levier de relèvement (42), au début de son mouvement de commande dans le sens d'une ouverture du dispositif d'attelage, agit sur le dispositif de commande (92) en vue d'ouvrir le clapet anti-retour (74, 78).

20. Dispositif d'attelage selon l'une quelconque des revendications 15 à 19, **caractérisé en ce que** l'élément de serrage agissant sur le maître-cylindre (52) est formé par un levier de blocage (118) qui, lorsque le dispositif d'attelage est fermé, s'engage dans la trajectoire de réglage de l'axe de couplage (18) de telle sorte qu'il bloque le mouvement naturel de l'axe de couplage (18) dans la direction d'ouverture, et lequel levier peut être déverrouillé par le mécanisme d'actionnement au début du mouvement de l'axe de couplage (18) dans la direction d'ouverture.

21. Dispositif d'attelage selon la revendication 20, **caractérisé en ce que** le levier de blocage (118) est monté pivotant sur le carter (120) du dispositif d'attelage et peut être poussé contre le maître-cylindre (52) par un mécanisme à genouillère (130), dont l'axe d'articulation (138) est en prise avec un ressort (142) dans la direction de poussée, et est en prise avec le mécanisme d'actionnement du dispositif d'attelage dans la direction d'ouverture.

22. Dispositif d'attelage selon la revendication 3 et selon l'une quelconque des revendications 4 à 15 dans la mesure où elles dépendent de la revendication 3, **caractérisé en ce que** le dispositif d'amortissement est réalisé dans une bague anti-usure (156) entourant avec une forme de fer à cheval le logement pour pivot (150).
